# EUROPÄISCHE PATENTANMELDUNG

(11) **EP 2 163 321 A1**
(43) Veröffentlichungstag der Anmeldung: **17.03.2010**
(21) Anmeldenummer: 09011474.5
(22) Anmeldetag: 08.09.2009
(51) Int. Cl.: B21C 23/14, B60P 1/44

(54) **Verfahren zur Herstellung einer Ladeplattform für eine Hubladebühne sowie Ladeplattform und Hubladebühne**

(30) Priorität: 15.09.2008 DE 102008047340; 25.10.2008 DE 102008053260
(71) Anmelder: MBB Palfinger GmbH, 27777 Ganderkesee (DE)
(72) Erfinder: Zimmermann, Martin, 27711 Osterholz-Scharmbeck (DE); Rulfs, Eike, 27804 Berne (DE)
(74) Vertreter: Möller, Friedrich

(57) **Zusammenfassung**

Ladeplattformen von Hubladebühnen werden üblicherweise aus durch Strangformgebung hergestellten Profilen (21) aus Leichtmetall gebildet. Auf ihrer Oberseite (26) sind diese Profile (21) zur Rutschhemmung mit Stegen (29) versehen. Diese Stege (29) bewirken eine Rutschhemmung quer zu ihrer Längsrichtung. Um eine Rutschhemmung auch in Längsrichtung der Stege (29) zu bewirken, werden die Stege (29) mit Vertiefungen (34) versehen. Diese Vertiefungen (34) werden üblicherweise gefräst. Dabei entstehen scharfe Kanten und damit eine Verletzungsgefahr.

Die Erfindung schlägt vor, die Vertiefungen (34) nach der Strangformgebung durch Umformen in die Stege (29) einzuprägen. Damit werden scharfe Kanten an den Umrissen der Vertiefungen (34) schon bei der Herstellung vermieden.

## Beschreibung

Die Erfindung betrifft ein Verfahren zur Herstellung einer Ladeplattform für eine Hubladebühne gemäß dem Oberbegriff des Anspruchs 1. Darüber hinaus betrifft die Erfindung eine Ladeplattform für eine Hubladebühne gemäß dem Oberbegriff des Anspruchs 9 und eine Hubladebühne gemäß dem Oberbegriff des Anspruchs 14 bzw. 15.

Hubladebühnen dienen dazu, das Be- und Entladen von Fahrzeugen mit insbesondere schweren Gegenständen zu erleichtern. Dazu verfügen die Hubladebühnen über eine vorzugsweise an der Rückseite eines Fahrzeugaufbaus durch ein Hubwerk heb- und senkbar sowie schwenkbar angelenkte Ladeplattform.

Die Ladeplattform wird unter anderem zur Reduzierung ihres Eigengewichts aus Profilen, insbesondere Strangpressprofilen, aus Leichtmetall gebildet. Die Profile können sowohl quer als auch längs zur Fahrtrichtung des Fahrzeugs verlaufen.

Die Profile sind auf ihrer eine Nutzfläche der Ladeplattform bildenden Oberseite mit längs verlaufenden Stegen versehen. Diese Stege machen die Nutzfläche der Ladeplattform rutschhemmend. Diese Rutschhemmung wirkt allerdings nur in einer Richtung quer zu den Stegen. Zur Ausbildung einer Rutschhemmung auch längs der Stege werden diese mit Vertiefungen versehen. Dies geschieht bisher durch spanabhebende Fertigungsverfahren, insbesondere Fräsen, welche kosten- und zeitaufwendig sind. Außerdem erhalten die Vertiefungen bei der spanenden Bearbeitung scharfe Kanten, die zu Verletzungen führen können und beim Begehen und Befahren der Ladeplattform einen hohen Verschleiß hervorrufen.

Der Erfindung liegt die Aufgabe zu Grunde ein Verfahren zur Herstellung einer Ladeplattform für eine Hubladebühne, sowie eine Ladeplattform und eine Hubladebühne zu schaffen, wobei auf einfache Weise unter Vermeidung scharfer Kanten Vertiefungen in die Stege einbringbar sind.

Ein Verfahren zur Lösung dieser Aufgabe weist die Maßnahmen des Anspruchs 1 auf. Demzufolge werden die Vertiefungen durch Umformen in die Stege der Profile eingebracht. Dabei kommt es zu einer abgerundeten Ausbildung der Umrisse der Vertiefungen während des Fertigungsprozesses. Die Verletzungsgefahr an den Randbereichen der Vertiefungen in den Stegen wird so auf einfache Weise verhindert.

Vorzugsweise wird die Ladeplattform aus durch eine Strangformgebung hergestellten Profilen gebildet, insbesondere aus Strangpressprofilen. Das Strangpressen stellt ein bewährtes Fertigungsverfahren für Profile aus Leichtmetall dar.

In einer bevorzugten Ausführungsform wird die Bildung der Vertiefungen in den Stegen durch Umformung nach der Strangformgebung der Profile durchgeführt, vorzugsweise vor dem vollständigen Abkühlen der Profile. Diese Ausgestaltung des Verfahrens ermöglicht die gezielte Ausnutzung der Restwärme aus dem Formgebungsprozess zur Erleichterung der Umformung. Bevorzugt wird das Umformen durchgeführt nachdem das Profil die Pressform verlassen hat. Einerseits soll dabei der Profilstrang noch so warm sein, dass die zur Umformung genutzten Werkzeuge geschont und auch die Umformkräfte reduziert werden. Andererseits ist das Profil aber schon so weit abgekühlt, dass die geometrische Beschaffenheit des Profils durch das Umformen nicht beeinträchtigt wird.

Vorzugsweise wird die Umformung kontinuierlich vorgenommen, z.B. durch eine um eine quer zur Strangformrichtung des Profils verlaufende Drehachse drehbare Walze, die zu den gewünschten Vertiefungen in den Stegen korrespondierende Vorsprünge aufweist. Eine Änderung des bestehenden Fertigungsprozesses ist damit nicht nötig, zudem wird durch die Vorsprünge auf der Walze die Geometrie der Vertiefungen und ihr Abstand vorgegeben.

In einer weiteren vorteilhaften Ausführungsform kann die Umformung auch diskontinuierlich erfolgen, vorzugsweise mittels eines quer zur Strangformrichtung des Profils angeordneten Prägebalkens. Um eine Unterbrechung des Produktionsablaufes zu vermeiden, ist es vorteilhaft, diesen Prägebalken während der Umformung synchron mit dem Profil taktweise weiterzubewegen.

Nach einer bevorzugten Weiterbildung des Verfahrens wird die Bildung der Vertiefungen in den Stegen durch Kaltumformen vorgenommen. Zum Umformen braucht das Profil dann nicht erwärmt zu werden. Jedoch kann beim Kaltumformen das Profil noch eine Restwärme aufweisen. Durch die Kaltumformung wird bewirkt, dass die Randbereiche der Vertiefungen im Zuge der Umformung eine Verfestigung erfahren, insbesondere bei der Verwendung von Aluminium oder Aluminiumlegierungen zur Herstellung der Profile.

Vorzugsweise werden die an die Vertiefungen angrenzenden Randbereiche der Stege durch den Umformprozess wulstförmig ausgebildet. Die gleichmäßige Ausbildung dieser Randbereiche erfolgt in Abhängigkeit von der Vertiefungsgeometrie durch die Verdrängung von Material im Bereich der Vertiefung. Alle Umrisse der Vertiefungen werden so zwangsweise abgerundet, so dass ein Entgraten oder anderweitiges Behandeln der Randbereiche zur Vermeindung von Verletzungen nicht mehr nötig ist.

Eine Ladeplattform zur Lösung der eingangs genannten Aufgabe weist die Merkmale des Anspruches 9 auf. Durch die Einbringung der Vertiefungen in die Stege durch Umformen, wird eine Ladeplattform geschaffen, die sowohl in Längs- als auch Querrichtung rutschfest und damit sicher für die bedienenden Personen ist, sich aber auch günstig und einfach herstellen lässt.

Nach einer bevorzugten Weiterbildung der erfindungsgemäßen Ladeplattform sind die Vertiefungen in den Stegen in gleichen oder etwa gleichen Abständen zueinander angeordnet. So wird gewährleistet, dass an jedem Punkt der Nutzfläche der Ladeplattform Vertiefungen zur Rutschhemmung zur Verfügung stehen.

Vorzugsweise sind die Vertiefungen quer zur Ausdehnung der Stege eingebracht. Dies stellt sicher, dass in Längsrichtung der Stege eine optimale Rutschhemmung erreicht wird.

In einer bevorzugten Weiterbildung der erfindungsgemäßen Ladeplattform sind die an die Vertiefungen angrenzenden Randbereiche der Stege durch das Umformen wulstförmig ausgebildet. Diese Ausbildung der Randbereiche vermeidet scharfe Kanten und mindert bzw. verhindert somit die Verletzungsgefahr für eine mit der Ladeplattform in Kontakt stehende Person. Zudem wird die Fertigung der Ladeplattform insofern vereinfacht und vergünstigt, dass ein weiterer Arbeitsschritt, z.B. ein Entgraten, vollständig entfallen kann.

Bevorzugt gehen die Vertiefungen in den Stegen der Ladeplattform von oberen freien Begrenzungsflächen aus. Mit dieser geometrischen Ausbildung wird sichergestellt, dass auf der von oben betretenen Ladeplattform stets Vorsprünge zur Rutschhemmung in Längs- und Querrichtung der Ladeplattform zur Verfügung stehen.

Vorzugsweise erstrecken sich die Vertiefungen nur über einen Teil der Höhe der Stege, beispielsweise etwa über 30 - 70% der Höhe der Stege. Damit ist sichergestellt, dass die Vertiefungen ausreichend tief ausgebildet sind, um eine gute Rutschhemmung zu gewährleisten. Außerdem werden die Stege durch die Vertiefungen nicht unterbrochen. Die Stege tragen dadurch trotz der Vertiefungen zur Stabilisierung des Profils bei.

Bei einer vorteilhaften Ausgestaltung der Ladeplattform weisen die Vertiefungen in den Stegen eine etwa V-förmige Gestalt auf. Diese Ausgestaltung der Vertiefungen hat sich als sowohl einfache vor allem durch Umformen zu fertigende, als auch effektive Rutschhemmung erwiesen. Es sind allerdings auch beliebige andere Ausformungen der Vertiefungen denkbar, wie z.B. U-förmige, halbrunde oder trapezförmige.

Eine erfindungsgemäße Hubladebühne für Fahrzeuge weist die Merkmale des Anspruchs 14 auf. Durch die Ausbildung der Stege der Ladeplattform der Hubladebühne mit Vertiefungen nach dem Verfahren gemäß einem oder mehreren der Ansprüche 1 bis 8 wird die Herstellung vereinfacht.

Eine ebenso erfindungsgemäße Hubladebühne für Fahrzeuge weist die Merkmale des Anspruchs 15 auf. Diese zeichnet sich dadurch aus, dass die Ladeplattform der Hubladebühne nach einem der Ansprüche 9 bis 13 ausgebildet ist.

Ein bevorzugtes Ausführungsbeispiel der Erfindung wird nachfolgend anhand der Zeichnung erläutert. In dieser zeigen:
- Fig. 1: eine prinzipielle Darstellung einer Hubladebühne in einer Schließstellung,
- Fig. 2: eine prinzipielle Darstellung der Hubladebühne mit in eine Ladestellung geschwenkter Ladeplattform,

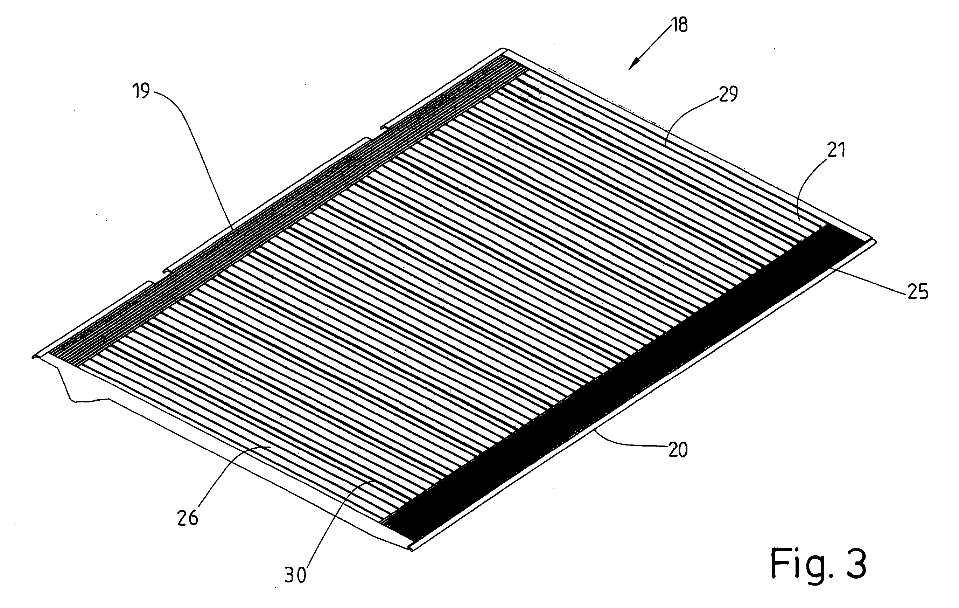

- Fig. 3: eine Ladeplattform einer Hubladebühne,

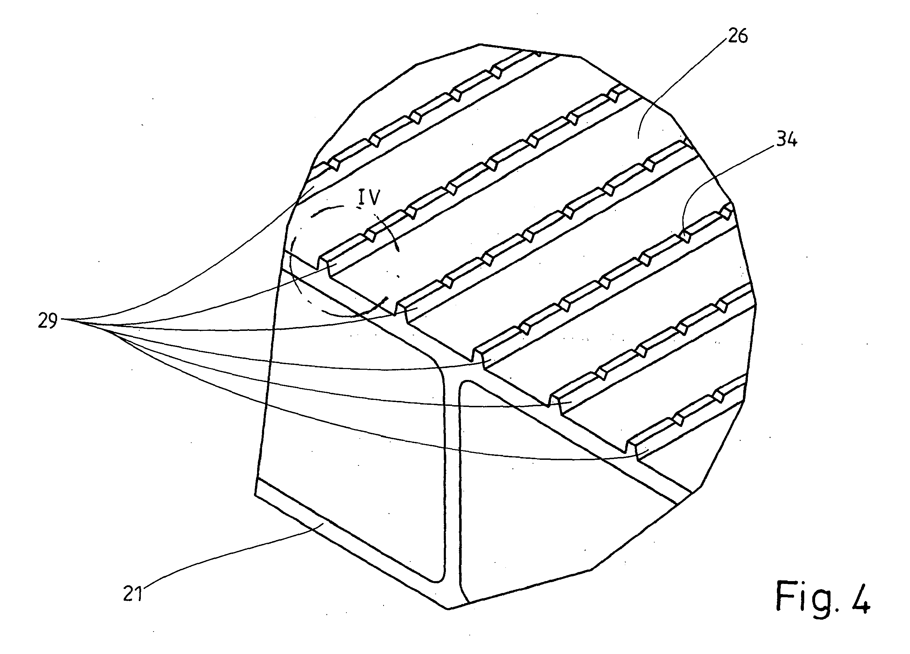

- Fig. 4: einen Ausschnitt eines die Ladeplattform bildenden Profils in perspektivischer Ansicht,

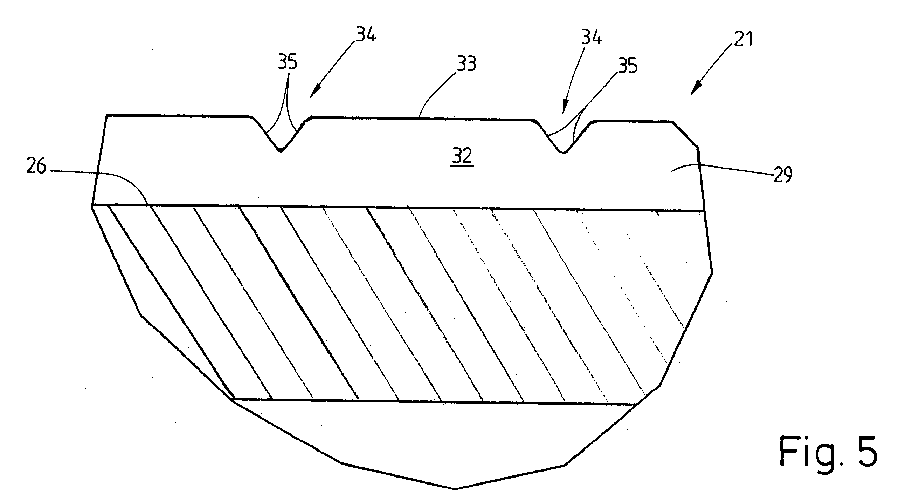

- Fig. 5: eine Schnittdarstellung des oberen Bereiches der Ladeplattform mit Stegen,

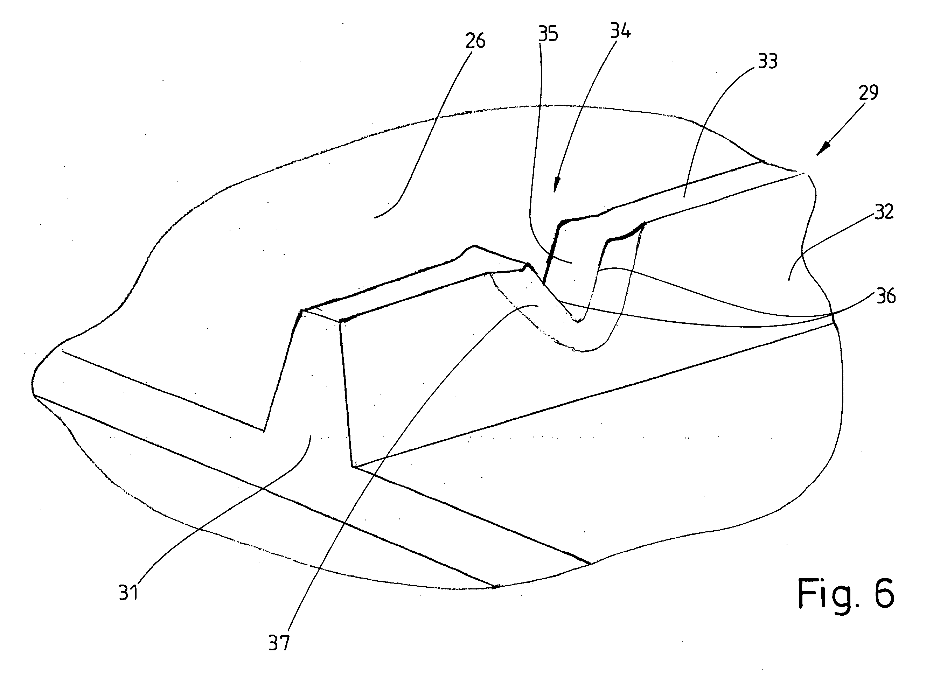

- Fig. 6: eine Einzelheit VI aus der Fig. 4 in perspektivischer Darstellung,
- Fig. 7: eine schematische Darstellung einer Strangformgebungsanlage mit anschließender Prägeeinrichtung in einer Draufsicht, und
- Fig. 8: die Strangformgebungsanlage aus Fig. 7 in einer Seitenansicht.

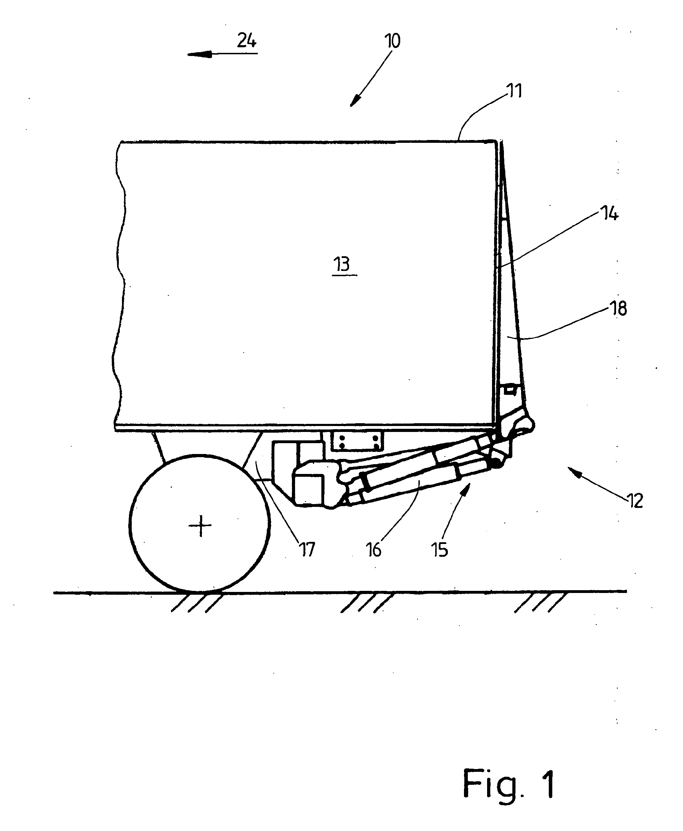

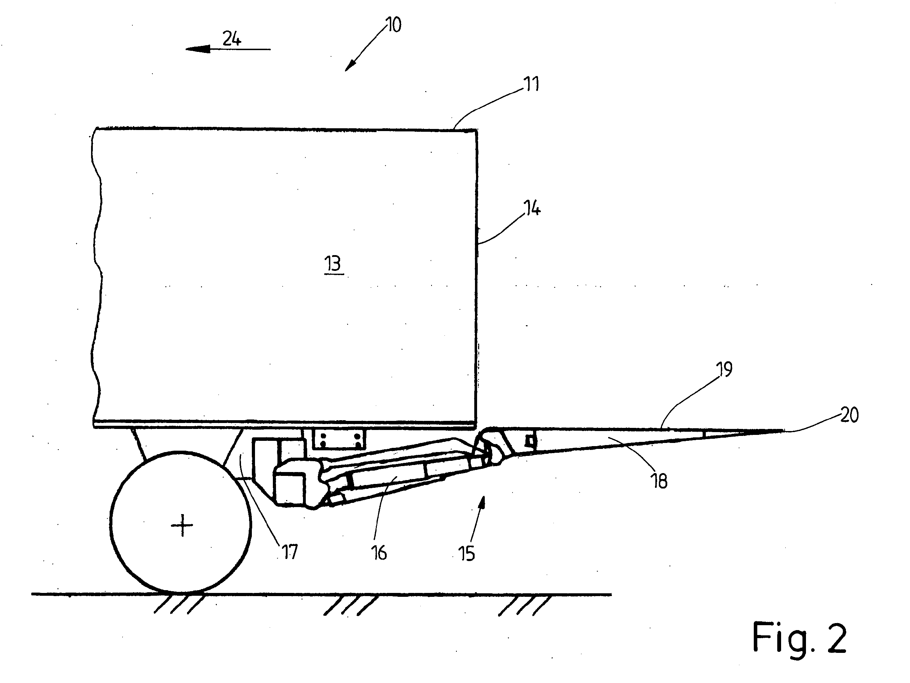

Die Figuren zeigen teilweise ein Fahrzeug, und zwar einen Lastkraftwagen 10. Der Lastkraftwagen 10 verfügt über einen Aufbau 11, bei dem es sich im gezeigten Ausführungsbeispiel um einen sogenannten Kofferaufbau handelt. Der gezeigte Aufbau verfügt über eine vollständig offene Rückseite 12. Die übrigen Wandungen 13 des Aufbaus 11 sind geschlossen. Der Rückseite 14 des Lastkraftwagens 10 ist eine Hubladebühne 15 zugeordnet. Die in üblicher Weise ausgebildete Hubladebühne 15 verfügt über ein Hubwerk 16, das an einem nur andeutungsweise in Fig. 1 dargestellten Fahrwerksrahmen 17 des Lastkraftwagens 10 angeordnet ist. Das Hubwerk 16 trägt eine Ladeplattform 18, die in der beispielsweise in der Fig. 1 gezeigten Schließstellung die offene Rückseite 12 des Aufbaus 11 vollständig verschließt. In der in Fig. 2 gezeigten Ladestellung der Hubladebühne 15 ist die Ladeplattform 18 mittels des Hubwerkes 16 in eine waagerechte Position geschwenkt. Damit steht eine eine Nutzfläche 19 bildende obere Seite der Ladeplattform 18 zur Aufnahme von Lasten und Personen zur Verfügung.

Die obere Seite und eine untere Seite der Ladeplattform 18 verlaufen vom Hubwerk 16 aus zu einer freiliegenden Hinterkante 20. Die Ladeplattform 18 wird aus mehreren Profilen 21 gebildet. Die Profile können gleich ausgebildet sein. Sie verlaufen längs zur Fahrtrichtung 24 des Lastkraftwagens 10. Die Profile 21 bilden aneinandergefügt die genannte Geometrie der Ladeplattform 18. Die Profile 21 werden dazu formschlüssig an ihren Längsseiten zur Ladeplattform 18 zusammengefügt und mit geeigneten Mitteln verbunden. Dies kann z.B. durch Schrauben oder andere Verbindungsmittel erfolgen. Im gezeigten Ausführungsbeispiel sind den Profilen 21 von den Außenseiten her Randprofile 25 zugeordnet, welche ebenfalls zur Verbindung der Profile 21 dienen können. Die Profile 21 und 25 sind zur Reduzierung des Gewichts der Ladeplattform 18 als hohle Strangpress- oder Stangegießprofile aus Leichtmetall, insbesondere Aluminium ausgebildet.

Auf einer einen Teil der Nutzfläche 19 der Ladeplattform 18 bildenden Oberseite 26 weist jedes Profil 21 in Längsrichtung, also längs zur Fahrtrichtung 24 verlaufende Stege 29 auf. Diese Stege 29 verlaufen in gleichem Abstand zueinander. Dieser Abstand ist größer als ihre Höhe, er entspricht insbesondere etwa dem drei- bis fünffachen ihrer Höhe. Dabei ist der Abstand des Stegs 29 im Randbereich der Profile 21 jeweils so angeordnet, dass der über die Verbindungen 30 der Profile 21 gebildete Abstand zwischen zwei Stegen 29 gleich dem Abstand zwischen zwei Stegen 29 innerhalb eines der Profile 21 ist.

Die Stege 29 sind in ihrem Querschnitt leicht trapezförmig ausgebildet. Es ist jedoch im Sinne der Erfindung jede andere Form möglich, insbesondere rechteckige oder dreieckige Querschnitte. Ihre Höhe ist dabei etwa doppelt so groß wie die Breite am Fuß 31 des Stegs 29. Die Stege 29 weisen zwei Seitenflächen 31 und eine obere Begrenzungsfläche 33 auf. Sie sind einstückig durch den Fuß 31 mit den Profilen 21 verbunden.

In alle Stege 29 sind in gleichmäßigen Abständen, die etwa den Abständen zwischen den Stegen 29 entsprechen, Vertiefungen 34 eingebracht, und zwar erfindungsgemäß durch Umformen. Diese Vertiefungen 34 dienen dazu, die Nutzfläche 19 der Ladeplattform 18 auch in Längsrichtung der Profile 21 und somit auch in Fahrtrichtung 24 rutschhemmend zu machen. Die Vertiefungen 34 sind im gezeigten Ausführungsbeispiel V-förmig bzw. dreieckförmig mit etwa gleichen Seitenlängen ausgebildet. Sie erstrecken sich von der oberen Begrenzungsfläche 33 der Stege 29 bis etwa zur halben Höhe der Stege 29. Damit sind die Stege 29 bis etwa zu ihrer halben Höhe durchgängig und nicht durch Vertiefungen 34 unterbrochen, wodurch die Stege 29 zur Stabilität der Profile 21 und der Ladeplattform 18 beitragen.

Durch das Umformen entstehen stumpfe Innenflächen 35 zur Begrenzung der Vertiefungen 34. Das davor die Vertiefungen 34 ausfüllende Material ist verdrängt und bildet am Umriss 36 der Vertiefungen 34 und damit am Übergang zwischen den Innenflächen 35 und den Seitenflächen 32 bzw. der oberen Begrenzungsfläche 33 der Stege 29 wulstförmige Erhebungen 37. Dadurch ist der Übergang zwischen den Innenflächen 35 der Vertiefungen 34 und den Seitenflächen 32 bzw. der oberen Begrenzungsfläche 33 der Stege 29 weich und ohne scharfe Kanten oder Grate gestaltet.

Im beschriebenen Ausführungsbeispiel sind die Profile 21 in Längsrichtung der Ladeplattform 18 und damit in Fahrtrichtung 24 des Lastkraftwagens 10 angeordnet. Dem Gedanken der Erfindung nach ist jedoch auch eine Anordnung der Profile 21 in Querrichtung der Ladeplattform 18 und damit quer zur Fahrtrichtung 24 des Lastkraftwagens 10 möglich.

Nachfolgen wird das erfindungsgemäße Verfahren zur Herstellung einer Ladeplattform 18 für eine Hubladebühne 15 erläutert.

Innerhalb einer Strangformgebungsanlage 38 wird zunächst ein Profilrohling 39 mit darauf aufgebrachten Stegen 29 hergestellt, wobei diese Stege 29 noch keine Vertiefungen 34 enthalten. Der Profilrohling 39 wird nach dem Strangformprozess langsam abgekühlt. Die Vertiefungen 34 werden nach dem teilweisen Abkühlen des Profilrohlings 39 durch Umformen, insbesondere Kaltumformen, in die Stege 29 eingebracht. Der Profilrohling 39 ist dabei so weit abgekühlt, dass die Geometrie seines Querschnitts nicht durch das Umformverfahren beeinträchtigt wird.

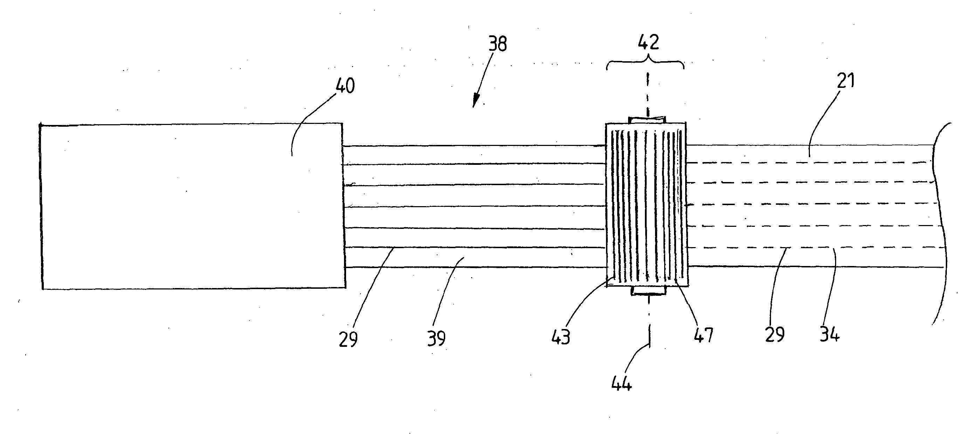

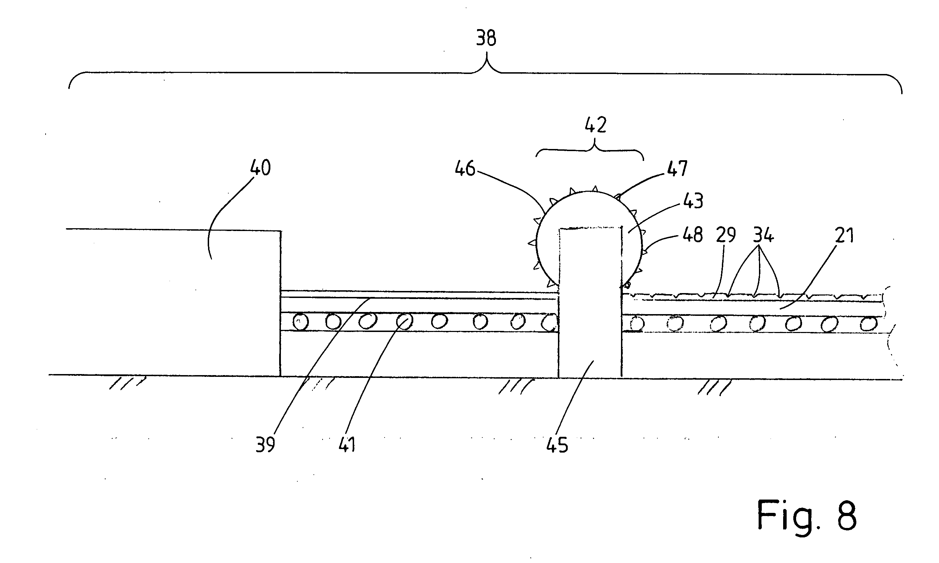

Die Figuren 7 und 8 zeigen rein beispielhaft eine Strangformgebungsanlage 38, womit sich das erfindungsgemäße Verfahren durchführen lässt.

Die Einbringung der Vertiefungen 34 in die Stege 29 erfolgt in diesem Ausführungsbeispiel nach dem teilweisen Abkühlen des Profilrohlings 39 durch Umformen.

Innerhalb eines ersten Bereiches der Strangformgebungsanlage 38 wird dem Profilrohling 39 durch das Strangformwerkzeug 40 seine Form einschließlich der angeformten Stege 29 gegeben. Nach Verlassen des Strangformwerkzeuges 40 wird der Profilrohling 39 im noch warmen Zustand über eine Rollenbahn 41 aus dem Strangformwerkzeug 40 herausgeführt und während des damit erfolgenden Abkühlens durch die Rollenbahn 41 zur Verhinderung von Verformungen unterstützt. Der Profilrohling 39 wird danach der Prägeeinrichtung 42 zugeführt.

Die Prägeeinrichtung 42 umfasst unter Anderem eine Walze 43 mit einer Achse 44, welche in einem Lagerbock 45 gehalten ist. Die Höhe der Achse 44 über der Rollenbahn 41 ist so gewählt, dass eine äußere Zylinderfläche 46 der Walze 43 in geringem Abstand zur oberen Begrenzungsfläche 33 der an den Profilrohling 39 angeformten Stege 29 liegt oder kraftfrei auf dieser aufliegt. Die Walze 43 verfügt auf ihrer äußeren Zylinderfläche 46 über Prägeleisten 47, die im gleichen Abstand zueinander um den gesamten Umfang der Walze 43 angeordnet sind. Der abgewickelte Abstand der Prägeleisten 47 auf der Zylinderfläche 46 der Walze 43 zueinander entspricht dem gewünschten Abstand der Vertiefungen 34 innerhalb der Stege 29. Der Querschnitt der Prägeleisten 47 auf der Walze 43 korrespondiert dabei mit der gewünschten Geometrie der Vertiefungen 34 in den Stegen 29, insbesondere entspricht die Höhe der Prägeleisten 47 etwa der Hälfte der Höhe der Stege 29. Die Breite der Walze 43 und die Länge der Prägeleisten 47 ist so bemessen, dass beide den Profilrohling 39 zumindest in seiner vollen Breite überdecken, vorzugsweise sind die Walze 43 und die Prägeleisten 47 etwas breiter als der Profilrohling 39. Die Umfangsgeschwindigkeit der Walze 43 wird durch einen nicht gezeigten Antriebsmotor synchron zur Bewegung des Profilrohlings 39 gehalten.

Durchläuft der Profilrohling 39 den Bereich der Walze 43, so kommen alle Stege 29 des Profilrohlings 39 mit den Prägeleisten 47 in Kontakt. Diese laufen nacheinander in die Stege 29 des mit konstanter Vorwärtsgeschwindigkeit geführten Profilrohlings 39 ein. Damit beginnt der Prägeprozess. Das noch über eine Restwärme aus dem vorhergehenden Formprozess verfügende Material aller Stege 29 wird dabei durch die Prägeleisten 47 verdrängt und so gleichzeitig die Vertiefungen 34 aller Stege 29 des Profilrohlings 39 eingeprägt. Die Innenflächen 35 der Vertiefungen 34 liegen dabei jeweils vollständig an den Außenflächen 48 der Prägeleisten 47 an. Die jeweils nachfolgende Prägeleiste 47 trifft so in definiertem Abstand zur vorhergehend geformten Vertiefung 34 auf die Stege 29 des Profilrohlings 39 und prägt damit die jeweils nächste Vertiefung 34 in die Stege 29, und zwar mit einem definierten, vorzugsweise gleichen, Abstand zur vorhergehenden Vertiefung 34.

Beim Prägevorgang ist der Profilrohling 39 so weit abgekühlt, dass seine Geometrie durch das Prägen der Vertiefungen 34 in die Stege 29, nicht verformt wird. Dem Profilrohling 38 wird dazu keine zusätzliche Wärme zugeführt, das Prägen geschieht als Kaltumformen.

Die so fertiggestellten, noch endlosen Profile 21 werden auf der Rollenbahn 41 von der Prägeeinrichtung 42 aus weitergeführt und können einem nächsten Fertigungsschritt, wie z.B. dem Zusägen, zugeführt werden.

### Bezugszeichenliste:

- 10: Lastkraftwagen
- 11: Aufbau
- 12: Rückseite
- 13: Wandung
- 14: Rückseite
- 15: Hubladebühne
- 16: Hubwerk
- 17: Fahrwerksrahmen
- 18: Ladeplattform
- 19: Nutzfläche
- 20: Hinterkante
- 21: Profil
- 24: Fahrtrichtung
- 25: Randprofil
- 26: Oberseite
- 29: Steg
- 30: Verbindung
- 31: Fuß
- 32: Seitenfläche
- 33: obere Begrenzungsfläche
- 34: Vertiefung
- 35: Innenfläche
- 36: Umriss
- 37: Erhebung
- 38: Strangformgebungsanlage
- 39: Profilrohling
- 40: Strangformwerkzeug
- 41: Rollenbahn
- 42: Prägeeinrichtung
- 43: Walze
- 44: Achse
- 45: Lagerbock
- 46: Zylinderfläche
- 47: Prägeleiste
- 48: Außenfläche

## Patentansprüche

1. Verfahren zur Herstellung einer Ladeplattform (18) für eine Hubladebühne (15), wobei die Ladeplattform (18) auf ihrer Oberseite Stege (29) aufweist die zur Rutschhemmung mit Vertiefungen (34) versehen werden, **dadurch gekennzeichnet, dass** die Vertiefungen (34) durch Umformen gebildet werden.

2. Verfahren nach Anspruch 1, **dadurch gekennzeichnet, dass** die Ladeplattform (18) aus durch eine Strangformgebung hergestellten Profilen (21) gebildet wird.

3. Verfahren nach Anspruch 1 oder 2, **dadurch gekennzeichnet, dass** die Bildung der Vertiefungen (34) in den Stegen (29) durch Umformung nach der Strangformgebung der Profile (21) erfolgt, vorzugsweise vor dem vollständigen Abkühlen der Profile (21) unter Ausnutzung der Restwärme desselben.

4. Verfahren nach einem der vorhergehenden Ansprüche, **dadurch gekennzeichnet, dass** die Umformung kontinuierlich vorgenommen wird, vorzugsweise durch eine um eine quer zur Strangformrichtung der Profile (21) verlaufende Drehachse (44) drehbare Walze (43) mit zu den gewünschten Vertiefungen (34) in den Stegen (29) korrespondierenden Vorsprüngen.

5. Verfahren nach einem der vorhergehenden Ansprüche, **dadurch gekennzeichnet, dass** die Umformung diskontinuierlich erfolgt, vorzugsweise mittels eines quer zur Strangformrichtung des Profils (21) angeordneten Prägebalkens, welcher während der Umformung synchron mit dem Profil (21) weiterbewegt wird.

6. Verfahren nach einem oder mehrerer der vorhergehenden Ansprüche, **dadurch gekennzeichnet, dass** die Vertiefungen (34) in die Stege (29) ausgehend von oberen, freien Begrenzungsflächen (33) her eingebracht werden.

7. Verfahren nach einem oder mehrerer der vorhergehenden Ansprüche, **dadurch gekennzeichnet, dass** an die Vertiefungen (34) angrenzende Randbereiche der Stege (29) beim Umformen wulstförmig ausgebildet werden.

8. Verfahren nach einem der vorhergehenden Ansprüche, **dadurch gekennzeichnet, dass** die Bildung der Vertiefungen (34) in den Stegen (29) durch Kaltumformen und/ oder Prägen vorgenommen wird.

9. Ladeplattform (18) für eine Hubladebühne (15) mit gegenüber ihrer Oberseite hervorstehenden Stegen (29) und in die Stege (29) eingebrachte Vertiefungen (34), **dadurch gekennzeichnet, dass** die Vertiefungen (34) in die Stege (29) eingeprägt sind.

10. Ladeplattform (18) nach Anspruch 9, **dadurch gekennzeichnet, dass** die Vertiefungen (34) in den Stegen (29) in gleichen oder etwa gleichen Abständen zueinander angeordnet sind und/oder die Vertiefungen (34) quer zur Ausdehnung der Stege (29) in dieselben eingebracht sind.

11. Ladeplattform (18) nach Ansprüchen 9 oder 10, **dadurch gekennzeichnet, dass** an die Vertiefungen (34) angrenzende Randbereiche der Stege (29) durch das Umformen wulstförmig ausgebildet sind.

12. Ladeplattform (18) nach einem oder mehreren der Ansprüche 9 bis 11, **dadurch gekennzeichnet, dass** die Vertiefungen (34) in den Stegen (29) eine etwa V-förmige Gestalt aufweisen und/oder die Vertiefungen (34) in den Stegen (29) von oberen, freien Begrenzungsflächen der Stege (29) ausgehen.

13. Ladeplattform (18) nach einem oder mehreren der Ansprüche 9 bis 12, **dadurch gekennzeichnet, dass** sich die Vertiefungen (34) nur über einen Teil der Höhe der Stege (29) erstrecken, vorzugsweise sich etwa über 30 bis 70% der Höhe der Stege (29) erstrecken.

14. Hubladebühne (15) für Fahrzeuge mit einer heb-, senk- und verschwenkbaren Ladeplattform (18), die eine Lasten aufnehmende Oberfläche mit gegenüber derselben hervorstehenden Stegen (29) mit Vertiefungen (34) aufweist, **dadurch gekennzeichnet, dass** die Vertiefungen (34) in den Stegen (29) nach dem Verfahren gemäß einem oder mehrerer der Ansprüche 1 bis 8 eingebracht werden.

15. Hubladebühne (15) für Fahrzeuge mit einer heb-, senk- und verschwenkbaren Ladeplattform (18), die eine Lasten aufnehmende Oberfläche mit gegenüber derselben hervorstehenden Stegen (29) mit Vertiefungen (34) aufweist, **dadurch gekennzeichnet, dass** die Ladeplattform (18) gemäß einem oder mehreren der Ansprüche 9 bis 13 ausgebildet ist.
